# EUROPÄISCHE PATENTSCHRIFT

(11) **EP 2 138 669 B1**
(45) Veröffentlichungstag und Bekanntmachung des Hinweises auf die Patenterteilung: **28.09.2011**
(21) Anmeldenummer: 09011633.6
(22) Anmeldetag: 02.06.2008
(51) Int. Cl.: E06B 5/12, E06B 9/02

(54) **Absturzsicherung**
Crash protection
Equipement de protection contre les chutes

(43) Veröffentlichungstag der Anmeldung: 30.12.2009
(62) Teilanmeldung aus: 08010049.8
(73) Patentinhaber: Feigl, Bernhard, 6911 Lochau (AT)
(72) Erfinder: Feigl, Bernhard, 6911 Lochau (AT)
(74) Vertreter: Engelhardt, Volker

(56) Entgegenhaltungen:
- DE-U1-202005 001 299
- US-A1- 2003 089 052

## Beschreibung

Die Erfindung bezieht sich auf eine Absturzsicherung nach dem Oberbegriff des Patentanspruches 1.

Der DE 10 2004 023 143 A1 ist eine Befestigungsvorrichtung aus Metall zu entnehmen, durch die eine Platte, insbesondere eine Glasplatte, an einem Mauerwerk abgestützt werden soll. Die Befestigungsvorrichtung besteht dabei aus zwei senkrecht zueinander und fest miteinander verbundenen Basisplatten in die jeweils eine oder mehrere Langlöcher eingearbeitet sind. Die Glasplatte weist eine oder mehrere Durchgangsbohrungen auf, die fluchtend zu den Langlöchern ausgerichtet werden, so dass die Glasplatte an einer der Basisplatten mittels Befestigungsschrauben gehalten ist. Die andere Basisplatte der Befestigungsvorrichtung wird mittels Befestigungsschrauben an dem Mauerwerk abgestützt.

Als nachteilig bei der bekannt gewordenen Befestigungsvorrichtung nach dem Stand der Technik hat sich herausgestellt, dass die Glasplatte und die Befestigungsvorrichtung starr, also unbeweglich, an dem Mauerwerk angebracht sind. Erschütterungen, insbesondere Krafteinwirkungen, die senkrecht zu dem Mauerwerk und der Platte verlaufen, werden ungedämpft von der Glasplatte an die Befestigungsvorrichtung und damit an das Mauerwerk weitergeleitet. Wenn demnach die horizontal verlaufenden Krafteinwirkungen auf die Glasplatte derart ansteigen, dass diese von der Befestigungsvorrichtung und den Befestigungsschrauben nicht mehr aufgenommen werden können, bricht die Befestigungsvorrichtung oder die Befestigungsschrauben werden aus ihren Bohrungen gerissen. Dies hat jedoch zur Folge, dass die Glasplatte nicht mehr zuverlässig an dem Mauerwerk befestigt ist und somit herunterfällt. Dabei können Personen verletzt werden.

Des Weiteren wird durch die Zerstörung der Befestigungsvorrichtung und das Herunterfallen der Glasplatte der Durchgangsbereich freigegeben, der üblicherweise von der Glasplatte verschlossen ist, um beispielsweise als Geländerbrüstung an einem Balkon oder an einer nach außen führenden Türöffnung als Absturzsicherung zu wirken. Dies führt somit zu einem weiteren Gefahrenpotenzial, denn die oftmals von Menschen aufgebrachten Kräfte, durch die die Befestigungsvorrichtung zerstört werden kann, führt beim Absturz der Glasplatte auch dazu, dass die kraftaufbringenden Personen möglicherweise zusammen mit der Glasplatte herunterfallen.

Darüber hinaus ist es auch denkbar, dass die horizontal auf die Glasplatte einwirkenden Kräfte impulsweise auftreten und folglich über eine längere Zeitdauer aufgrund von Schwingungen die Verbindung zwischen den Gewinden in dem Mauerwerk und der Befestigungsschraube bzw. zwischen den Gewinden in der Befestigungsvorrichtung und den Befestigungsschrauben ausschlagen und auch dadurch die mechanische Befestigung gelöst wird.

Die DE 202005001299 U offenbart eine Glasplatte nach dem Oberbegriff des Anspruchs 1.

Es ist daher Aufgabe der Erfindung, eine Absturzsicherung der eingangs genannten Gattung zur Verfügung zu stellen, die zum Einen zuverlässig an einem Mauerwerk eines Gebäudes angebracht werden kann und durch die zum Anderen die auf diese einwirkenden Energien in Form von Kräften und Drehmomenten derart aufgenommen werden, dass diese gefedert und somit reduziert an das Mauerwerk weitergeleitet sind. Durch die erfindungsgemäße Absturzsicherung soll demnach ein Energieabbau der auf die Glasplatte einwirkenden Kräfte oder Drehmomente gewährleistet sein.

Diese Aufgabe wird erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass zwischen der die Platte abstützenden U-Profilschienen und den vier Aufnahmekörpern, die an dem Mauerwerk über Befestigungsschrauben gehalten sind, ein Dämpfungselement angeordnet ist, das sowohl im Bereich der Profilschiene als auch im Bereich des Aufnahmekörpers relativ zu diesen beweglich gelagert ist, können die auf die Platte einwirkenden Kräfte und Drehmomente abgefedert oder gedämpft werden.

In der Zeichnung ist ein erfindungsgemäßes Ausführungsbeispiel dargestellt, das nachfolgend näher erläutert wird. Im Einzelnen zeigt:

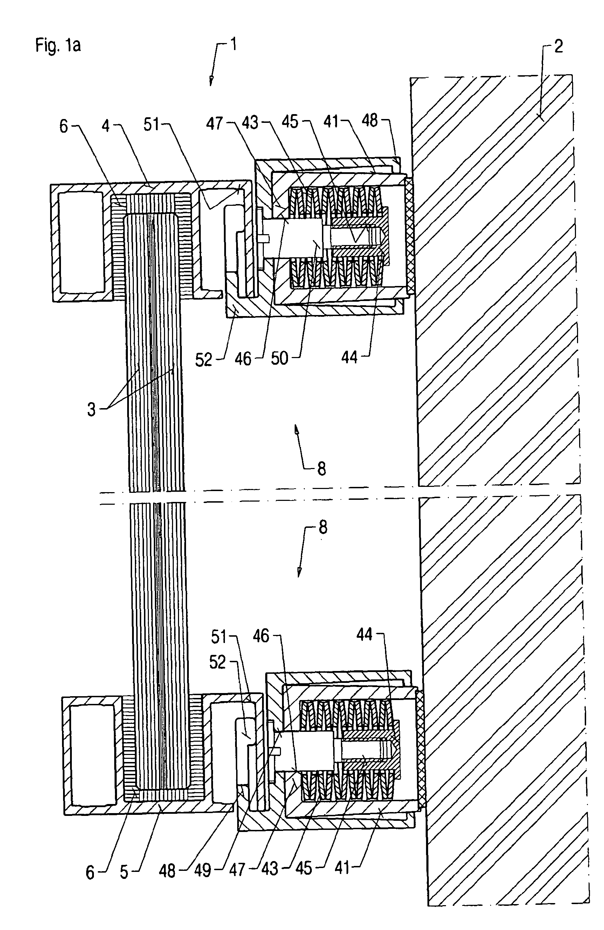

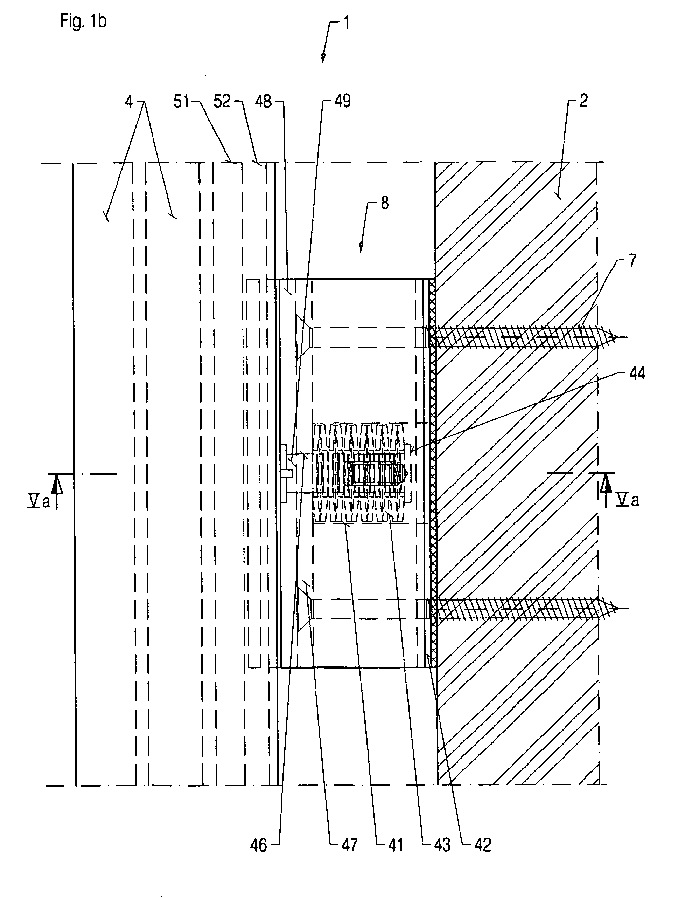

- Figur 1 a: eine Absturzsicherung zur Halterung einer Platte, mit vier als Kastenprofil ausgestaltete Aufnahmekörpern, in deren Inneren sechs Tellerfedern als Dämpfungselemente eingesetzt sind, die über eine Hülse und eine Befestigungsschraube mit einem auf der Außenseite des Kastenprofils angeordneten Führungskörper verbunden sind, und mit einer von dem Führungskörper in Richtung der Platte abstehenden Aufnahmetasche, in die ein L-förmiges Ansatzstück, das an einer mit der Platte verbundenen U- Profilschiene angebracht ist, eingesetzt ist, im Schnitt und im unbelasteten Zustand,
- Figur 1 b: die Absturzsicherung gemäß Figur 1a in Draufsicht,
- Figur 2a: die Absturzsicherung gemäß Figur 1a im belasteten Zustand,
- Figur 2b: die Absturzsicherung gemäß Figur 1 a in Draufsicht,

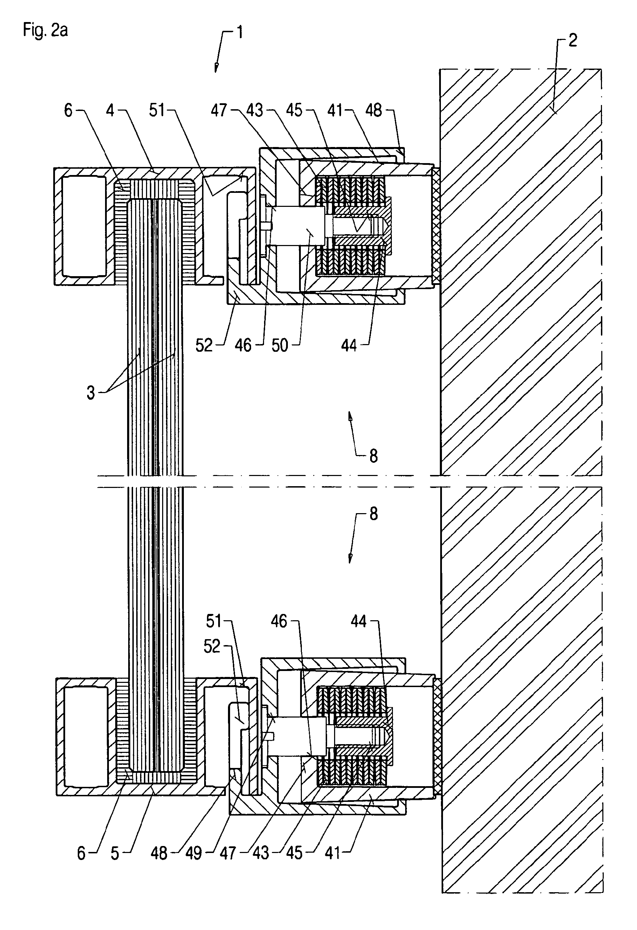

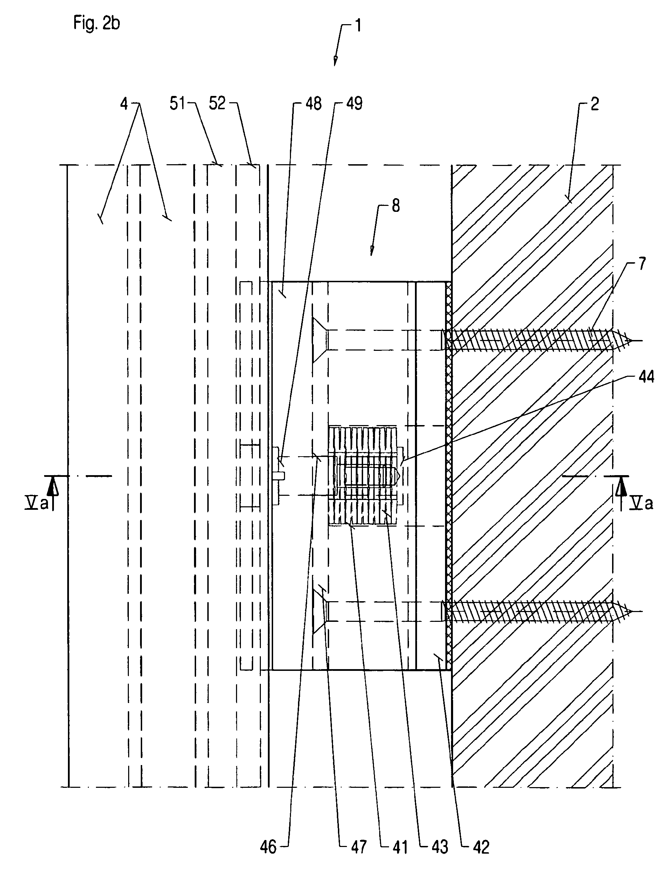

Den Figuren 1a bis 2b kann eine Absturzsicherung 1 entnommen werden, durch die eine in einem Mauerwerk 2 vorhandene Türöffnung 9 ganz oder zumindest teilweise abgedeckt ist, um zu verhindern, dass Personen, Tiere, Gegenstände oder dgl. aus der Türöffnung 9 herausfallen können. Um ein ästhetisch ansprechendes Erscheinungsbild für die Absturzsicherung 1 zu erreichen, besteht diese aus zwei miteinander verbundenen Glasplatten 3, die als Sicherheitsglas ausgebildet sind. Gegebenenfalls können die Glasplatten 3 ganz oder teilweise emailliert sein, um eine Sichtschutzwand zu erzeugen.

Die beiden Glasplatten 3 sind in zwei zueinander parallel verlaufenden U-Profilschienen 4 und 5 mittels einer Klebeschicht 6 arretiert. An dem Mauerwerk 2 sind, wie dies nachfolgend noch näher erläutert wird, vier Aufnahmekörper 8 mittels Befestigungsschrauben 7 angebracht. Die Aufnahmekörper 8 können vorzugsweise mit der U-Profilschiene 4 ausschließlich verbunden sein und die Profilschiene 5 wird starr an dem Mauerwerk 2 oder einem Fensterstockrahmen befestigt. Die beiden U-Profilschienen 4 und 5 stehen mit den jeweiligen Aufnahmekörpern 8 in kraftschlüssiger Wirkverbindung. Diese Wirkverbindung ist jedoch derart konstruktiv ausgestaltet, dass bei einer horizontal belasteten Glasplatte 3 eine Dämpfung der auf die Glasplatte 3 einwirkenden Kräfte erfolgt.

Die Platte 3 weist eine rechteckförmige Kontur auf; die Aufnahmekörper 8 sind dabei den vier Eckbereichen der Platte 3 zugeordnet.

Den Figuren 1a bis 2b kann eine besondere Ausgestaltung der erfindungsgemäßen Absturzsicherung 1 entnommen werden. Der Aufnahmekörper 8 ist dabei als geschlossenes Kastenprofil 41 ausgebildet. Eine Wandung des Kastenprofils 41 wird dabei als Grundplatte 42 an dem Mauerwerk 2 mittels den Befestigungsschrauben 7 arretiert. In der dieser Grundplatte 42 gegenüberliegenden Wandung 47 des Kastenprofils 41 ist eine Durchgangsbohrung 46 eingearbeitet. Im Inneren des Kastenprofils 41 sind sechs Tellerfedern 43 angebracht, die sich seitlich neben der Durchgangsbohrung 46 auf der Innenseite der Wandung 47 des Kastenprofils 41 abstützen.

Auf der Außenseite des Kastenprofils 41 ist ein im Querschnitt U-förmig ausgestalteter Führungskörper 48 bewegbar aufgesetzt. Der Führungskörper 48 weist eine Öffnung 49 auf, die im montierten Zustand fluchtend zu der Durchgangsbohrung 46 verläuft. In die Öffnung 49 und in die Durchgangsbohrung 46 wird eine Schraube 50 eingesetzt, die in ein in einer T-förmigen Hülse 44 eingearbeitetes Gewinde 45 eingedreht ist. Die T-förmige Hülse 44 wird demnach durch die Schraube 50 in Richtung auf die Durchgangsbohrung 46 und die Öffnung 49 entgegen der Kraft der Tellerfedern 43 bewegt, so dass die Tellerfedern 43 durch die Hülse 44 an der Innenseite der Wandung 47, in die die Durchgangsbohrung 46 eingearbeitet ist, angepresst sind.

An dem Führungskörper 48 ist eine L-förmig ausgestaltete Aufnahme 52 angeformt, die nach oben offen ist. Ein an der jeweiligen U-Profilschiene 4 oder 5 vorgesehene L-förmige Haltenase 51, die umgekehrt zu der Aufnahme 52 ausgerichtet ist, kann demnach von oben in die Aufnahme 52 des Führungskörpers 48 eingeschoben werden und stützt sich an dieser in vertikaler und horizontaler Richtung ab. Folglich ist die U-Profilschiene 4 und 5 in der Aufnahme 52 sowohl in vertikaler als auch in horizontaler Richtung arretiert.

Wird nunmehr die Glasplatte 3 in vertikaler Richtung mit Kräften beaufschlagt, so werden diese durch die Bewegung des Führungskörpers 48 relativ zu dem Kastenprofil 41 und durch die Tellerfedern 43 abgefedert. Die Tellerfedern 43 werden nämlich, wie dies insbesondere den Figuren 6a und 6b entnommen werden kann, durch diese Kräfte zusammengedrückt und der Führungskörper 48 bewegt sich von dem Mauerwerk 2 weg.

## Patentansprüche

1. Absturzsicherung (1), durch die eine Platte (3), insbesondere eine Glasplatte, an einem Mauerwerk (2) oder an einem Fensterstockrahmen eines Gebäudes gehalten ist, mit mindestens einem vorzugsweise den Eckbereichen der Platte (3) zugeordneten Aufnahmekörper (8), der bzw. die an dem Mauerwerk (2) angebracht ist bzw. sind, und mit mindestens zwei an der Platte (3) arretierten U-Profilschienen (4, 5), die parallel zueinander verlaufen und die an dem jeweiligen Aufnahmekörper (8) abgestützt sind,
**dadurch gekennzeichnet,**
**dass** der Aufnahmekörper (8) als geschlossenes Kastenprofil (41) ausgebildet ist, dass in eine dem Mauerwerk (2) gegenüberliegende Wandung (47) des Kastenprofils (41) eine Durchgangsbohrung (46) eingearbeitet ist, dass an den von dem Mauerwerk (2) abstehenden Schenkeln des Kastenprofils (41) ein diesen umgreifender U-förmiger Führungskörper (48) aufgesetzt ist, der relativ zu dem Kastenprofil (41) bewegbar und in den eine Öffnung (49) eingearbeitet ist, die im montierten Zustand fluchtend zu der Durchgangsbohrung (46) verläuft, dass in dem Kastenprofil (41) eine oder mehrere Tellerfedern (43) angeordnet ist bzw. sind, die an der Wandung (47) des Kastenprofils (41) seitlich neben der Durchgangsbohrung (46) anliegt bzw. anliegen und die mittels einer T-förmig ausgestalteten Hülse (44) zwischen dieser und der Wandung (47) des Kastenprofils (41) durch eine die Durchgangsbohrung (46) und die Tellerfedern (43) durchgreifende Schraube (50) verspannt gehalten ist, die in einem in die Hülse (44) eingearbeiteten Gewinde (45) eingedreht ist und die seitlich neben der Öffnung (49) des Führungskörpers (48) anliegt, und dass an der U-Profilschiene (4, 5) seitlich neben der Platte (3) eine L-förmige Haltenase (51) angeformt ist, die in eine U-förmige Aufnahmetasche (52), die an dem Führungskörper (48) angebracht ist, eingesteckt ist.

2. Absturzsicherung nach Anspruch 1,
**dadurch gekennzeichnet,**
**dass** die jeweilige U-Profilschiene (4, 5) in senkrecht zu dem Mauerwerk (2) verlaufender Richtung durch die in dem Kastenprofil (41) eingesetzten Tellerfedern (43) in Form eines Zylinders abgestützt ist.

## Claims

1. A crash protection (1) by means of which a panel (3), in particular a pane of glass, is held against a masonry wall (2) or a window frame of a building, with at least one holding body (8) preferably allocated to the corner areas of the panel (3), which is or are attached to the masonry wall (2), and with at least two U-section rails (4, 5) locked onto the panel (3) running in parallel with one another and supported on the corresponding holding body (8),
**characterised in that**,
the holding body (8) is configured as a closed box section (41), that a through-hole (46) is worked into a wall (47) of the box section (41) opposite the masonry wall (2), that a U-shaped guide body (48) surrounding the box section (41) is placed on the legs of the box section (41) projecting from the masonry wall (2) and the guide body (48) can be moved in relation to the box section (41) and has an opening (49) worked into it which runs in line with the through-hole (49) in the installation condition, that one or more cup springs (43) is or are arranged in the box section (41) being in contact with the wall (47) of the box section (41) on the side next to the through-hole (46) and is or are held clamped between a T-shaped sleeve (44) and the wall (47) of the box section (41) by means of a screw (50) that passes through the through-hole (46) and the cup springs (43), in which case the screw (50) is screwed into a thread (45) worked into the sleeve (44) and makes contact on the side next to the opening (4) of the guide body (48), and that an L-shaped holding lug (51) is formed on the U-section rail (4, 5) on the side next to the panel (3), with the holding lug (51) attached to or inserted into a U-shaped holding pocket (52) attached to the guide body (48).

2. The crash protection in accordance with Claim 1,
**characterised in that**,
The corresponding U-section rail (4, 5) is supported in the direction running at right angles to the masonry (2) by means of the cup springs (43) inserted in the box section (41) in the form of a cylinder.

## Revendications

1. Protection de chute (1), permettant de retenir une plaque (3), en particulier une plaque de verre, sur un murage (2) ou sur un cadre de dormant d'un bâtiment, avec au moins un corps de logement (8) assigné de préférence aux coins de la plaque (3), qui est fixé (qui sont fixés) sur le murage (2), et avec au moins deux glissières parallèles de profil en U (4, 5) retenues sur la plaque (3) et qui s'appuient sur le corps de logement (8) respectif,
**caractérisée en ce que**
le corps de logement (8) est conçu en profil de caisse fermée (41), que dans une paroi (47) du profil de caisse (41) donnant sur le murage (2), il est pratiqué un perçage de passage (46), que sur les bras du profil de caisse (41) éloignés du murage (2), il est monté un corps de guidage en U (48) qui l'entoure, qui est mobile par rapport au profil de caisse (41) et dans lequel il est pratiqué une ouverture (49), qui, en état monté, est en alignement précis par rapport au perçage de passage (46), que dans le profil de caisse (41), il est arrangé un ou plusieurs ressorts à disque (43) portant à côté du perçage de passage (46) sur la paroi (47) du profil de caisse (41) et qui, moyennant une douille sous la forme d'un T (44) sont serrés entre celui-ci et la paroi (47) du profil de caisse (41) par un boulon (50) passant à travers le perçage de passage (46) et les ressorts à disque (43), qui est vissé dans un filetage (45) pratiqué dans la douille (44) et qui porte sur le côté de l'ouverture (49) du corps de guidage (48), et que sur la glissière de profil en U (4, 5), à côté de la plaque (3), il est formé un nez de retient (51) inséré dans une poche de logement en U (52) prévue sur le corps de guidage (48).

2. Protection de chute d'après la revendication 1,
**caractérisée en ce que**
en direction perpendiculaire par rapport au murage (2), la glissière de profil en U respective (4, 5) est appuyée par les ressorts à disque cylindriques (43) insérés dans le profil de caisse (41).
